# EUROPEAN PATENT SPECIFICATION

(11) **EP 1 267 463 B1**
(45) Date of publication and mention of the grant of the patent: **17.11.2010**
(21) Application number: 02425380.9
(22) Date of filing: 10.06.2002
(51) Int. Cl.: H02G 1/08, G02B 6/44

(54) **Improved apparatus for laying cables within guide tubes by means of a pressurised hydraulic fluid**
Verbesserte Vorrichtung zum Verlegen von Kabeln in Führungsrohren mittels eines hydraulischen Fluids unter Druck
Dispositif perfectionné de pose de câbles dans des tuyaux de guidage au moyen d'un fluide hydraulique sous pression

(30) Priority: 13.06.2001 IT RM20010119
(43) Date of publication of application: 18.12.2002
(73) Proprietor: FIBOT HOLDING LTD., Pieta'MSD - Malta (MT)
(72) Inventor:
(74) Representative: Iannone, Carlo Luigi

(56) References cited:
- WO-A-92/17927

## Description

The present invention relates to some improvements to an apparatus for carrying out operations for laying cables, particularly optical fibres, within tubes, by a pressurised hydraulic fluid.

Traditionally, mainly due to the always more diffused use of optical fibres cables, empty tubes are laid underground, within said tubes being passed, when necessary, cables. This technique allow to avoid subsequent and repeated digging operations to introduce new cables, since it is sufficient to make them passing through the already laid underground guide tubes. Traditional technique for laying cables within guide tubes provides that said cables are introduced within the tubes and pulled from one end, by a pulling rope. This operation involves the application of high tensions on the cable, said tensions exponentially increasing with the length of the path and are further increased by the presence along the path of curves and elbows. Friction coefficient between the cable and the tube is usually reduced employing particular lubricants (that are very expensive), while to reduce the length of the cable to be subjected to traction, the expedient is used to put half of the length of the cable on one side and half on the other side of the same tube.

A relevant improvement in this field has been introduced by the Italian Patent N° 1,244,964, describing a process, and the relevant apparatus, for laying cables within guide tubes by a pressurised hydraulic fluid. More specifically, the above mentioned patent concerns a process for introducing a cable within a tube, comprising the following steps: providing the cable, that must be introduced, from a reel, having an adjusted speed; advancing said cable toward the tube at a mostly uniform speed; introducing one end of the cable within a first end of the tube; at the same time, introducing a hydraulic fluid within said first end and pushing through said tube, in such a way that said hydraulic fluid exerts on the mass of said cable a floating thrust, and on its surface, a dragging force, so as to bring the cable up to the exit from a second end of the tube.

Furthermore, said invention describes an apparatus for carrying out said process, comprising: a cable supporting reel, operated by a variable speed oleodynamic motor, to feed the cable that must be introduced; a device to adjust the rotation speed of said reel, comprising a tensile sensor coupled with the cable unwound and fed by the reel; a controlling device to adjust the sliding speed, and thus the introduction speed for the cable within the tube, accelerating and/or decelerating the cable according to the needing, in such a way to avoid abrupt accelerations / decelerations, and consequent possible water hammers; a flow chamber device (that will be in the following indicated as venturimeter), hermetically coupled with the inlet end for the tube to canalise at the same time the cable that must be introduced and the floating / dragging hydraulic fluid.

Then, said apparatus has been improved by the Italian Utility Model N° 227,223, suggesting a solution having modified shape, combination and disposition of the component parts, to carry out the process in order to realise a movable and particularly compact apparatus.

However, the apparatus as described in the above mentioned patent and utility model has serious and recurrent drawbacks, rising during its use, particularly concerning the shape of the venturimeter and with the features of the movable container on which the cable recovery reel is provided.

In fact, each sudden stop during the cable laying and/or each pressure wave with a reverse motion within the tube induce a longitudinal squeezing on the transverse sections of the cable, the harmful effects of which are transmitted and amplified releasing in correspondence of the inlet section of the cable, comprised of the venturimeter chamber, of the connection space between venturimeter and the same caterpillar, causing the knee folding of the cable, with the consequent breaking of the optical fibres comprising the same cable.

To avoid the damaging of the fibres, it is necessary to operate putting a particular care, in order to:
- mechanically protect the cable along its path and make the same moving within a seat that must properly match with its outer geometrical dimensions;
- have the cable perfectly axially placed along the single parts comprising its seat;
- not have the cable subjected to sliding and/or squeezing in correspondence of the cartepillar tracks, producing the motive action.

Said objects are obtained by the present invention, according to its first aspect, by adopting a mechanical protection system for the cable within the venturimeter, based on a guide and check device housed within the same venturimeter and within which the cable is introduced and guided, said guide and check device being such not to prevent the dragging action of the fluid on the same cable, and having a structure that can be freely opened to release the cable in case it is necessary to interrupt the laying operation.

Further object of the present invention is that of providing a series of improvements for the adjustments of the single parts comprising the inlet and sliding section of the cable, particularly aimed to the solution of the problem of axially placing and dragging the cable between the tracks.

A second drawback of the solutions of the prior art is the impossibility of putting a cable recovery reel on the movable container for the automatic feeding, due to the fact that they are realised according to different standard dimensions, and the fact that the movable container, provided within the block system, where also the other apparatuses of the system are housed, has not a variable and automatic loading capability sufficient.

Thus, a second aspect of the present invention is that of providing an automatic adjustment mechanical system of the movable container in such a way to allow the loading of reels having different dimensions.

The improved apparatus according to the present invention is obtained taking into account the experience matured while carrying out the work directly in the field, the experience for the refining of the use of many tests carried out on path polygons, and the use repeatability tested in different cases.

The features of the present invention will be more specifically described in the following, making reference to the enclosed drawings, wherein the preferred embodiment is shown, for illustrative and not limitative purposes.

In the drawings:
figure 1 is a perspective view of the outer part of the venturimeter, with the base on which it rests and the tube for the introduction of the fluid and of the cable;
figure 2 is an inner section view of the two parts comprising the venturimeter;
figure 3 is a perspective view of the mechanical protection device of the cable within the venturimeter;
figure 4 is a section view of the mechanical protection view of the cable within the venturimeter;
figure 5 is a lateral view of the assembly of the apparatuses for laying cables within guide tubes by pressurised hydraulic fluid; and
figure 6 is a perspective and sectioned view of the automatic mechanical system of the movable container of the cable recovery reel with variable loading of the same.

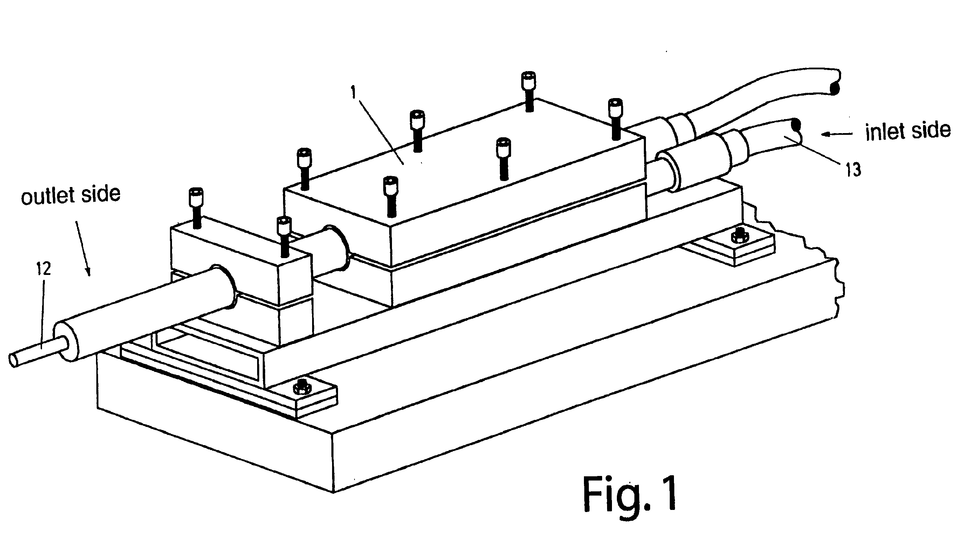

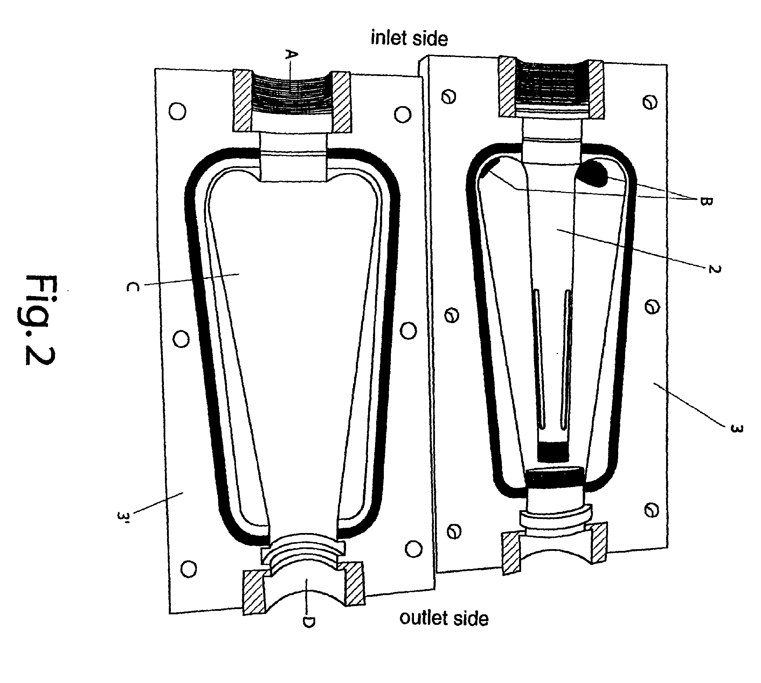

Making first reference to figures 1 and 2, it can be noted that the basic part of the assembly for laying cables within guide tubes is a so called venturimeter 1, having a flow or sliding chamber, specifically shown in figure 2. Said chamber is made up of two parts 3 and 3', coupling to define an inner space C, having a hole A for the entrance of the cable, one or more holes B for the entrance of the dragging fluid, preferably two holes, fed by ducts 13, as well as a hole D for the exit of the cable and of the dragging fluid.

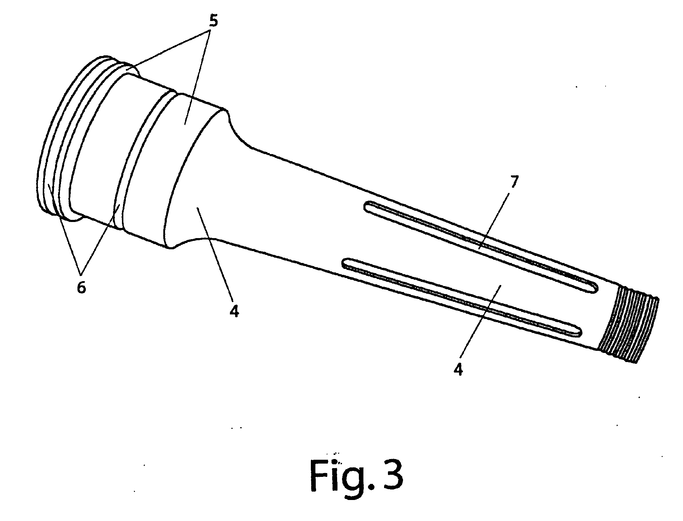

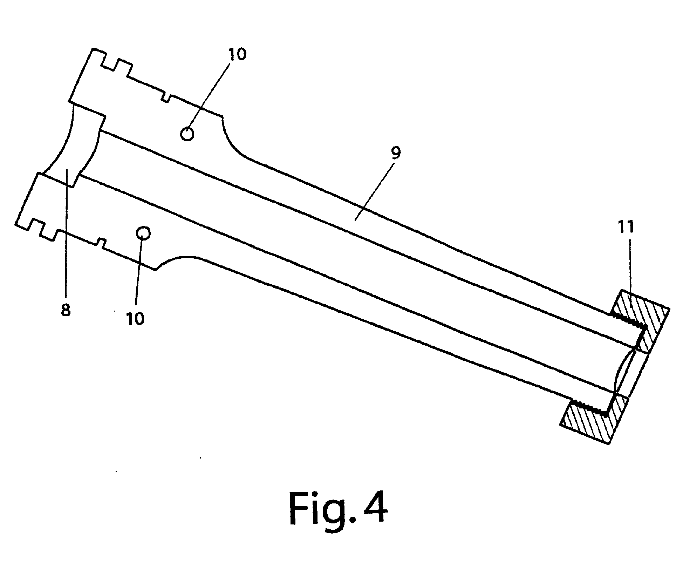

The invention concerns the use of a device 2 (shown in figures 3 and 4) for mechanically protect the cable within the venturimeter 1, guiding the cable in such a way that the latter is in any case free to move, without any friction against the inner surface of the device, allowing also the passage of a certain portion of the pressurised hydraulic fluid. Said device is realised in such a way to have a substantially cylindrical shape and a smooth and tapered outer surface 4, along the direction of the flow motion of the fluid, while the passage inner section slightly widens according to the direction of the outlet side. Furthermore, it is introduced within the venturimeter by a restraint system comprised of a base 5 fixed to the inlet hole A of the venturimeter, that is provided for the cable, thus ensuring the sealing closure of the same venturimeter by two gaskets provided within respective seats 6 realised on the base 5 of the device. In order to allow that the pressurised hydraulic fluid can pass through the venturimeter without relevant turbolences due to the flow vortex created, the mechanical protection device of the cable is provided, in correspondence of the second half of its length, i.e. in its half closest to the outlet hole D, with slits 7, for the passage of the fluid, said slits being symmetrically provided on the cylindrical surface, and distance from the same hole by a little gap in such a way not to leave the possibility of possible dangerous bending of the cable, but to allow the passage of the remaining fluid. In order to prevent that the fluid passing through said slits, or through the end of the device, can outflow outside the chamber from the side of the cable inlet, said device is provided, in correspondence of the base, with a seat 8 to contain a packing gland. Taking into consideration the possible need of releasing the cable, said device can be selected in two parts, one (9) of which is shown in figure 4, that can be reassembled by two male elements inserted within suitable seats 10 and a threaded ring nut 11, comprised of disposable low mechanical resistance plastics, during the opening step, applied to the outlet end of the cylinder 4.

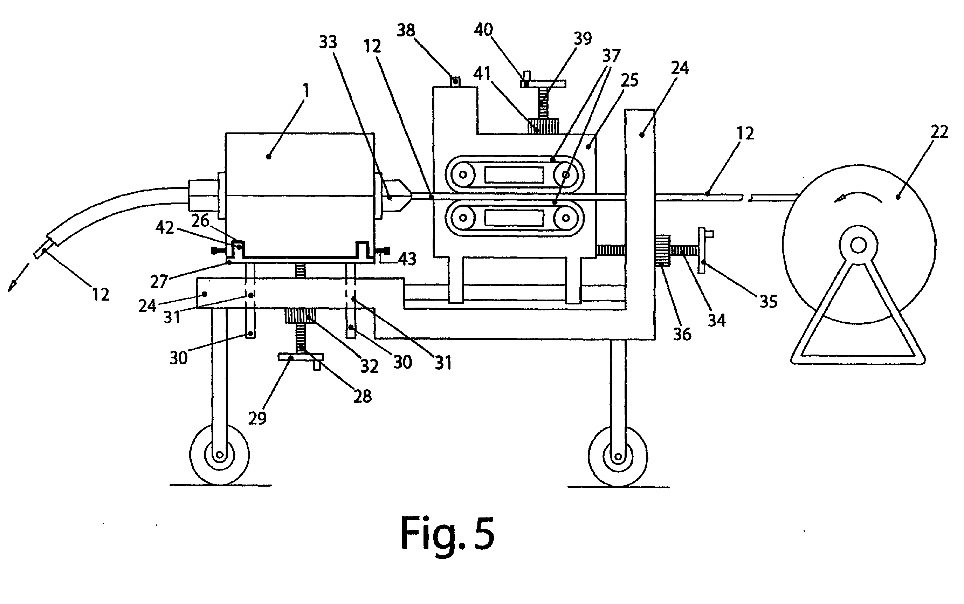

Making reference to figure 5, the following elements are put into evidence: reel 22 for recovering the optical fibre cable, carriage 24, supporting apparatuses for laying the cable, the venturimeter assembly 1 and the caterpillar assembly 25, provided with tracks 37, operated by an engine (not shown).

To obtain an optimum positioning of the venturimeter 1, it is possible to act in such a way to allow the same translating both according to a horizontal and a vertical direction.

To obtain the horizontal motion of the venturimeter 1, according to a transverse direction, perpendicular to the cable 12 direction, it has at the bottom two transverse grooves 26, by which it slidably rests on two corresponding transverse rails 42, provided on a resting base 27. Said resting base 27 is mounted on the carriage 24 by a worm screw 28 acting at the bottom on the resting base 27, engaging in a corresponding Archimedean screw (not shown) provided in the carriage 24.

Transverse adjustment of venturimeter 1 with respect to the cable is obtained displacing the venturimeter, with its grooves 26, with respect to the rails 42 of its resting base 27. Fixing of the adjusted position occurs by standard stop stud screws 43 acting between the venturimeter 1 and its resting base 27.

On the contrary, to vertically move the venturimeter, resting base 27 can be vertically displaced by said worm screw 28, operated by a wheel 29. Rotation of the worm screw 28 can be stopped by a stop knurled nut 32, acting against the support carriage 24. Furthermore, in order to avoid that, during the vertical movement, the displacement plane can incline, resting base 27 has, at the bottom, four lateral stud bars 30, each of them moving as a piston within corresponding seats 31 provided in said carriage 24.

Once the inlet pipe union 33 of the venturimeter is in line with the common rotation axis of the caterpillar 25 tracks 37, it is possible to move the caterpillar 25 in such a way that the same approaches the venturimeter 1, further reducing the space in correspondence of which the cable is not protected, and consequently can be subjected to bending.

For this movement, caterpillar 25 has a worm screw 34 coupling with a corresponding Archimedean screw (not shown), provided in the carriage 24. Practically, movement occurs acting on said worm screw 34 by a wheel 35, the rotation of said worm screw being possibly blocked by a stop knurled nut 36, acting against the carriage 24.

To further reduce the space between the inlet pipe union 33 of the venturimeter and the point between the carterpillar 25 tracks 37 where the cable exits, said pipe union can be shaped with a frusto conical shape, with its apex toward said point between the tracks 37.

A further solution aimed to minimise tensions to which the cable is subjected is based on giving to the two caterpillar tracks 37 the same rotation speed by the use of a twin gear couple, connected with the two tracks and operated by the output shaft 38 of a single trascinamento motor.

Moreover, proper frictioning of cable 12 between two tracks 37 can be adjusted vertically moving the upper track. This movement too is operated by a worm screw 39 engaged with a Archimedean screw (not shown) connected with the support of the track and operated by a wheel 40. Rotation of the worm screw 39 can be blocked by a knurled nut 41 acting against the venturimeter structure.

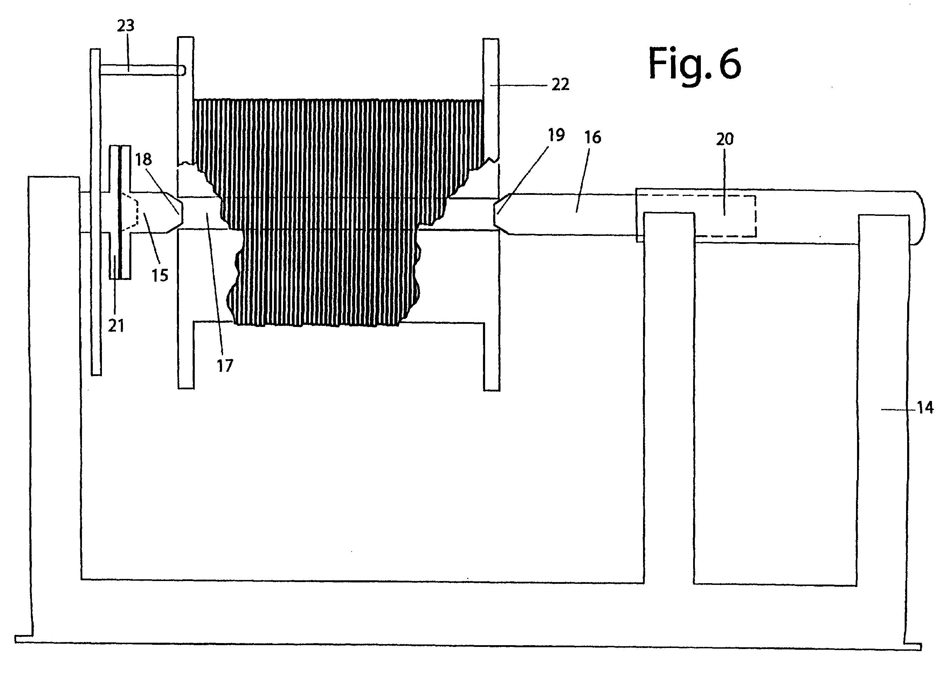

The second aspect of this invention concerns the realisation and use of a loading system for the recovery reel of the cable on the movable container, as shown in figure 6. Reel 22 is loaded on two cylinders 15 and 16, facing, under pressure, toward the lateral surfaces of the same reel in correspondence of its central hole 17; the ends of the cylinders 18 and 19, the diameter of which is bigger than the one of the central hole of the reel, have a frusto conical shape, in such a way to easily centre the hole during its loading and to allow the lifting of the reel 22 and the rotation of the same, in order to allow to the movable container to act as protection conformable to the different kind of reels, one (16) of the two cylinders is obtained by a automatically controlled retractable hydraulic piston 20, and the other one (15) has a fixed extension. Dragging while rotating of the reel 22, to wind and unwind the cable, is obtained by a pin 23, operated by each suitable manual or motorised means, coupled with the flange of the reel and rotating the same.

Apparatus thus realised effectively solves the problem of knee bending of the cable, forcing it within an arrangement of various adjustable devices, thus ensuring a valid mechanical protection. Further, the automatic mechanical system of the movable container of the reel allows to load different reels.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Improved apparatus for introducing a cable within a tube by a pressurised hydraulic fluid, comprising a venturimeter assembly (1), having a resting base (27), and comprising two parts (3, 3'), coupled to define a flow or sliding inner chamber (C) having a cable inlet hole (A), one or more dragging fluid inlet holes (B) and a cable and fluid dragging outlet hole (D), a caterpillar assembly (25), provided with two motorised tracks (37) to convey the cable from the reel (22) to the venturimeter assembly (1), all said elements being mounted on a support carriage (24), said apparatus also comprising a cable recovery reel (22), with relevant loading system on a movable container (14),
**characterised in that** said apparatus further comprises a device (2) for the protection against the longitudinal mechanical squeezing and to guide the cable within the venturimeter (1); means (26, 27, 42, 43) for adjusting the horizontal position and means (28, 29, 32) for adjusting the vertical position of said venturimeter assembly (1); means (34, 35, 36) for adjusting the longitudinal position of said caterpillar assembly (25); as well as means (39, 40, 41) for adjustment of the relevant position of the two tracks (37) of the caterpillar assembly (25), all said adjustment means being aimed to axially put the cable and to minimise the asymmetrical stresses on the cable due to different traction components on its surface; and **in that** said loading system of the cable recovery reel on the movable container (14) is conformable to the different dimensions of the reels.

2. Improved apparatus according to claim 1, **characterised in that** said mechanical protection device of the cable within the venturimeter has a substantially cylindrical shape, with an outer surface (4) smooth and tapered according to the motion direction of the fluid flow, and with an inner section slightly increasing toward the outlet side, and presenting a restraint base (5) coupable within a hole (A) of the venturimeter, for the entrance of the cable.

3. Improved apparatus according to claim 2, **characterised in that** said device for the mechanical protection of the cable within the venturimeter (1) has an inner section slightly increasing toward the outlet side.

4. Improved apparatus according to claim 2 or 3, **characterised in that** hydraulic sealing between said venturimeter (1) and said device for the mechanical protection of the cable within the venturimeter is obtained by two gaskets hosed within suitable seats (6) obtained in said base (5) of the device.

5. Improved apparatus according to claim 2 or 3, **characterised in that** said device for the mechanical protection of the cable within the venturimeter has, in correspondence of the second half of its length, i.e. **in that** half that, in the operation mode, is closer to the outlet hole (D), slits (7), symmetrically provided on the cylindrical surface, allowing the uniform passage of the flow within the device, without creating flow vortexes.

6. Improved apparatus according to claim 2 or 3, **characterised in that** said device for the mechanical protection of the cable within the venturimeter ends before the outlet hole (D) of the venturimeter, with a little slack that allow the passage of the remaining fluid, but not leaving space for possible dangerous bending of the cable.

7. Improved apparatus according to claim 2 or 3, **characterised in that** the restraint base (5) of said device for the mechanical protection of the cable within the venturimeter is provided with a seat (8) for containing a packing gland, preventing the outflow outside of the venturimeter from the side of the cable inlet hole (A).

8. Improved apparatus according to claim 2 or 3, **characterised in that** said device for the mechanical protection of the cable within the venturimeter can be sectioned in two parts, coupled during its operation but that can be divided in case it is necessary to release the cable.

9. Improved apparatus according to claim 8, **characterised in that** said device for the mechanical protection of the cable within the venturimeter can be assembled by two male elements introduced within the seats (10) and a disposable threaded ring nut (11), made up of low mechanical resistance plastic material, for its opening.

10. Improved apparatus according to claim 1, **characterised in that** said means (26, 27, 42, 43) for adjusting the horizontal transverse position of said venturimeter assembly (1) provide two transverse grooves (26), obtained in the lower surface of the venturimeter (1), by which it slidably rests on two corresponding transverse rails (42), provided on its resting base (27).

11. Improved apparatus according to claim 10, **characterised in that** the fixing of the adjusted transverse position of the venturimeter (1) with respect to the cable obtained moving the venturimeter (1) by its grooves (26) with respect to the rails (42) of its resting base (27) occurs by standard stop stud screws (43) acting between the venturimeter (1) and its resting base (27).

12. Improved apparatus according to claim 1, **characterised in that** said means (28, 29, 32) for adjustment of the vertical position of said venturimeter assembly (1) comprise said resting base (27) mounted on the support carriage (24) by a worm screw(28), fixed at the bottom to the resting base (27), said screw coupling with a corresponding Archimedean screw provided in the support carriage (24) and operated by a wheel (29).

13. Improved apparatus according to claim 12, **characterised in that** the vertical position of said venturimeter (1) is fixed by a blocking nut (32), screwed on said worm screw(28) against said support carriage (24).

14. Improved apparatus according to claim 12 or 13, **characterised in that** it further comprises vertical lower bars (30), under its resting base (27), sliding within seats (31) provided in the support carriage (24).

15. Improved apparatus according to claim 1, **characterised in that** said means for the longitudinal adjustment of the caterpillar assembly (25) comprise a worm screw(34) supported by said caterpillar assembly (1) and coupled to a corresponding Archimedean screw, provided in said carriage (24) and that can be operated by a wheel (35).

16. Improved apparatus according to claim 15, **characterised in that** the adjusted longitudinal position of said caterpillar assembly (1) is fixed by a stop knurled nut (36) screwed on said worm screw(34) against said support carriage.

17. Improved apparatus according to one of the preceding claims, **characterised in that** said venturimeter assembly (1) is interfacing with said caterpillar assembly (25) by a cable inlet pipe union (33) having a frusto conical shape, with the vertex oriented toward the tracks (37) of the caterpillar assembly (25).

18. Improved apparatus according to claim 1, **characterised in that** two tracks (37) of the caterpillar assembly (25) are operated by a single motor by a twin gear pair coupled with the output shaft (38) of said motor.

19. Improved apparatus according to claim 1, **characterised in that** said means (39, 40, 41) for adjustment of the relevant position of the two tracks (37) of the caterpillar assembly (25) comprise an Archimedean screw (39) carried by the lower track support and engaged with a Archimedean screw connected to the support of the upper track and operated by a wheel (40).

20. Improved apparatus according to claim 19, **characterised in that characterised in that** the adjusted relative position between the two tracks (37) of the caterpillar assembly (25) is fixed by a blocking knurled nut (1) screwed on said worm screw(39) against the frame of said caterpillar assembly (25).

21. Improved apparatus according to claim 1, **characterised in that** it is provided a loading system comprising two cylinders (15, 16) pressure faced on the lateral surfaces of the reel in correspondence of the central hole (17) for loading the cable recovery reel on the movable container, said cylinders having a diameter bigger with respect to the diameter of a central hole of the reel (14) and a frusto conical shaped end (18, 19) to easily centre the hole during the loading and allowing the lifting of the reel and the rotation of the same.

22. Improved apparatus according to claim 21, **characterised in that** one (16) of the two cylinders is an automatically controlled retractable hydraulic piston (20), and the other one (15) has a fixed extension (21), to conform to different cable reels having different sizes.

23. Improved apparatus according to claim 21 or 22, **characterised in that** the rotation dragging of the reel (22) to wind and unwind the cable is comprised of a pin (23) said pin coupling with the flange of the reel and dragging the same during the rotation.

## Patentansprüche

1. Verbesserte Vorrichtung zum Einführen einer Leitung in ein Rohr durch ein unter Druck stehendes Hydraulikfluid, umfassend
eine Venturimeter-Anordnung (1), die eine Auflagebasis (27) hat und zwei Teile (3, 3') aufweist, die gekoppelt sind, um eine innere Durchlauf- oder Strömungskammer (C) zu definieren, die eine Leitungseinlassöffnung (A), ein oder mehrere Schleppfluid-Einlassöffnungen (B) und eine Leitungs- und Schleppfluid-Auslassöffnung (D) aufweist,
eine Raupenanordnung (25), die mit zwei motorisierten Führungen (37) versehen ist, um die Leitung von der Rolle (22) zu der Venturimeter-Anordnung (1) zu befördern, wobei alle diese Elemente auf einem Stützgestell (24) montiert sind, wobei die Vorrichtung auch eine Leitungsausbringungsrolle (22) aufweist mit einem passenden Ladesystem auf einem beweglichen Gehäuse (14),
**dadurch gekennzeichnet, dass** die Vorrichtung weiterhin aufweist
eine Vorrichtung (2) zum Schutz gegenüber dem longitudinalen mechanischen Quetschen und zum Führen des Kabels innerhalb des Venturimeters (1);
Mittel (26, 27, 42, 43) zum Einstellen der Horizontalposition sowie Mittel (28, 29, 32) zum Einstellen der Vertikalposition der Venturimeter-Anordnung (1);
Mittel (34, 35, 36) zum Einstellen der Längsposition der Raupenanordnung (25);
sowie Mittel (39, 40, 41) zur Einstellung der passenden Position der beiden Führungen (37) der Raupenanordnung (25),
wobei all diese Einstellungsmittel darauf abzielen, die Leitung axial zu schieben und die asymmetrischen Belastungen auf das Kabel zu minimieren, die von unterschiedlichen Traktionsbauteilen auf dessen Oberfläche herrühren; und
dass das Ladesystem der Leitungsausbringungsrolle auf dem beweglichen Gehäuse (14) mit den verschiedenen Abmessungen der Rollen vereinbar ist.

2. Verbesserte Vorrichtung entsprechend Anspruch 1, **dadurch gekennzeichnet, dass** die mechanische Schutzvorrichtung der Leitung innerhalb des Venturimeters eine im Wesentlichen zylindrische Form hat mit einer Außenfläche (4), die glatt ist und sich entsprechend der Bewegungsrichtung des Fluidflusses verjüngt, und mit einem Innenabschnitt, der in Richtung der Auslassseite geringfügig zunimmt, und eine Arretierungsbasis (5) bildet, die innerhalb einer Öffnung (A) des Venturimeters koppelbar ist für den Eintritt der Leitung.

3. Verbesserte Vorrichtung gemäß Anspruch 2, **dadurch gekennzeichnet, dass** die Vorrichtung für den mechanischen Schutz der Leitung in dem Venturimeter (1) einen Innenabschnitt aufweist, der in Richtung der Auslassseite geringfügig zunimmt.

4. Verbesserte Vorrichtung gemäß Anspruch 2 oder 3, **dadurch gekennzeichnet, dass** eine hydraulische Dichtung zwischen dem Venturimeter (1) und der Vorrichtung zum mechanischen Schutz der Leitung innerhalb des Venturimeters erhältlich ist durch zwei Dichtungen, die in geeigneten Sitzen (6) sitzen, die in der Basis (5) der Vorrichtung erhältlich sind.

5. Verbesserte Vorrichtung gemäß Anspruch 2 oder 3, **dadurch gekennzeichnet, dass** die Vorrichtung zum mechanischen Schutz der Leitung innerhalb des Venturimeters entsprechend der zweiten Hälfte seiner Länge, d.h. derjenigen Hälfte, die im Betriebsmodus näher an der Auslassöffnung (D) ist, Schlitze (7) aufweist, die symmetrisch auf der zylindrischen Fläche vorgesehen sind, was einen einheitlichen Durchtritt der Strömung innerhalb der Vorrichtung erlaubt, ohne dass Strömungswirbel gebildet werden.

6. Verbesserte Vorrichtung gemäß Anspruch 2 oder 3, **dadurch gekennzeichnet, dass** die Vorrichtung zum mechanischen Schutz der Leitung innerhalb des Venturimeters vor der Auslassöffnung (D) des Venturimeters endet mit einem geringen Schlupf, der den Durchtritt des verbleibenden Fluids erlaubt, aber nicht genügend Raum lässt für ein möglicherweise gefährliches Biegen der Leitung.

7. Verbesserte Vorrichtung gemäß Anspruch 2 oder 3, **dadurch gekennzeichnet, dass** die Arretierungsbasis (5) der Vorrichtung zum mechanischen Schutz der Leitung innerhalb des Venturimeters mit einem Sitz (8) versehen ist, um eine Stopfbuchse zu enthalten, um einen Ausfluss außerhalb des Venturimeters von der Seite der Leitungseinlassöffnung (A) zu verhindern.

8. Verbesserte Vorrichtung gemäß Anspruch 2 oder 3, **dadurch gekennzeichnet, dass** die Vorrichtung zum mechanischen Schutz der Leitung innerhalb des Venturimeters in zwei Teile unterteilt werden kann, die während ihres Betriebs gekoppelt werden, aber die dann getrennt werden können, falls es notwendig sein sollte, die Leitung freizugeben.

9. Verbesserte Vorrichtung gemäß Anspruch 8, **dadurch gekennzeichnet, dass** die Vorrichtung zum mechanischen Schutz der Leitung innerhalb des Venturimeters aus zwei männlichen Elementen zusammengesetzt werden kann, die in die Sitze (10) eingeführt werden, und einer entfernbaren Gewinderingmutter (11), bestehend aus Kunststoffmaterial mit einer geringen mechanischen Widerstandsfähigkeit für deren Öffnung.

10. Verbesserte Vorrichtung gemäß Anspruch 1, **dadurch gekennzeichnet, dass** das Mittel (26, 27, 42, 43) zum Einstellen der horizontalen Querposition der Venturimeter-Anordnung (1) zwei Quernuten (26) bereitstellt, die in der unteren Oberfläche des Venturimeters (1) erhältlich sind, durch die es verschiebbar auf zwei entsprechenden Querschienen (42) ruht, die auf deren Auflagebasis (27) vorgesehen sind.

11. Verbesserte Vorrichtung gemäß Anspruch 10, **dadurch gekennzeichnet, dass** die Fixierung der eingestellten Querposition des Venturimeters (1) in Bezug auf die Leitung, erhältlich durch Bewegen des Venturimeters (1) durch dessen Nuten (26) in Bezug auf die Schienen (42) von deren Auflagebasis (27), erfolgt durch Standard-Anschlagmadenschrauben (43), die zwischen dem Venturimeter (1) und dessen Auflagebasis (27) wirken.

12. Verbesserte Vorrichtung gemäß Anspruch 1, **dadurch gekennzeichnet, dass** die Mittel (28, 29, 32) zum Einstellen der Vertikalposition der Venturimeteranordnung (1) die Auflagebasis (27) umfassen, die auf dem Stützgestell (24) durch ein Schneckenrad (28) montiert sind, befestigt am Boden der Auflagebasis (27), wobei die Schnecke gekoppelt ist mit einer entsprechenden Archimedischen Schraube, die in dem Stützgestell (24) vorgesehen und durch ein Rad (29) betrieben wird.

13. Verbesserte Vorrichtung gemäß Anspruch 12, **dadurch gekennzeichnet, dass** die Vertikalposition des Venturimeters (1) durch eine Verriegelungsmutter (32) fixiert ist, die auf das Schneckenrad gegen das Stützgestell (24) aufgeschraubt wird.

14. Verbesserte Vorrichtung gemäß Anspruch 12 oder 13, **dadurch gekennzeichnet, dass** sie weiterhin vertikale untere Streben (30) unter ihrer Auflagebasis (27) aufweist, die innerhalb von Sitzen (31) gleiten, die in dem Stützgestell (24) vorgesehen sind.

15. Verbesserte Vorrichtung gemäß Anspruch 1, **dadurch gekennzeichnet, dass** die Mittel zur longitudinalen Einstellung der Raupenanordnung (25) ein Schneckenrad (34) aufweisen, das von der Raupenanordnung (1) gestützt wird und mit einer entsprechenden Archimedischen Schraube gekoppelt ist, die in dem Gestell (24) vorgesehen ist und die von einem Rad (35) betrieben werden kann.

16. Verbesserte Vorrichtung gemäß Anspruch 15, **dadurch gekennzeichnet, dass** die eingestellte Längsposition der Raupenanordnung (1) durch eine Anschlag-Rändelmutter (26) fixiert wird, die auf das Schneckenrad (34) gegen das Stützgestell geschraubt ist.

17. Verbesserte Vorrichtung gemäß einem der vorangehenden Ansprüche, **dadurch gekennzeichnet, dass** die Venturimeter-Anordnung (1) eine Schnittstelle bildet mit der Raupenanordnung (25) durch eine Leitungseinlassrohrverbindung (33) mit einer kegelstumpfförmigen Form mit der Spitze ausgerichtet auf die Führungen (37) der Raupenanordnung (25).

18. Verbesserte Vorrichtung gemäß Anspruch 1, **dadurch gekennzeichnet, dass** die beiden Führungen (37) der Raupenanordnung (25) von einem einzelnen Motor durch ein Doppelzahnradpaar betrieben werden, das mit der Ausgangswelle (38) des Motors verbunden ist.

19. Verbesserte Vorrichtung gemäß Anspruch 1, **dadurch gekennzeichnet, dass** die Mittel (39, 40, 41) zur Einstellung der passenden Position der beiden Führungen (37) der Raupenanordnung (25) eine Archimedische Schraube (39) aufweisen, die von dem Auflager der unteren Führung getragen wird und im Eingriff steht mit einer Archimedischen Schraube, die mit dem Auflager der oberen Führung verbunden ist und von einem Rad (40) betrieben wird.

20. Verbesserte Vorrichtung gemäß Anspruch 19, **dadurch gekennzeichnet, dass** die eingestellte Relativposition zwischen den beiden Führungen (37) der Raupenanordnung (25) durch eine Blockier-Rändelmutter (1) fixiert wird, die auf das Schnekkenrad (39) gegen den Rahmen der Raupenanordnung (25) geschraubt wird.

21. Verbesserte Vorrichtung gemäß Anspruch 1, **dadurch gekennzeichnet, dass** sie vorgesehen ist in einem Ladesystem umfassend zwei mit Druck konfrontierte Zylinder (15, 16) an den seitlichen Flächen der Rolle in Übereinstimmung mit der Zentralöffnung (17) zum Beladen der Leitungsaufnahmerolle auf dem beweglichen Gehäuse, wobei die Zylinder einen Durchmesser aufweisen größer als der Durchmesser einer Zentralöffnung der Rolle (14) und ein kegelstumpfförmiges Ende (18, 19) aufweisen, um die Öffnung einfach zu zentrieren während der Beladung und um das Anheben der Rolle und die Drehung derselben zu ermöglichen.

22. Verbesserte Vorrichtung gemäß Anspruch 21, **dadurch gekennzeichnet, dass** einer (16) der beiden Zylinder ein automatisch gesteuert rückziehbarer Hydraulikkolben (20) ist und der andere (15) einen fixierten Fortsatz (21) aufweist, um sich an verschiedene Leitungsrollen mit unterschiedlichen Größen anzupassen.

23. Verbesserte Vorrichtung gemäß Anspruch 21 oder 22, **dadurch gekennzeichnet, dass** das Drehschleppen der Rolle (22) zum Aufrollen und Abrollen der Leitung aus einem Stift (23) besteht, wobei der Stift mit der Flanke der Rolle verbunden ist und dieselbe während der Drehung schleppt.

## Revendications

1. Appareil perfectionné destiné à introduire un câble dans un tube au moyen d'un fluide hydraulique sous pression, comprenant un ensemble Venturi (1), ayant une base d'appui (27), et comprenant deux parties (3, 3'), accouplées pour définir une chambre intérieure d'écoulement ou de coulissement (C) ayant un orifice d'entrée du câble (A), un ou plusieurs orifices d'entrée de fluide d'entraînement (B) et un orifice de sortie du câble et du fluide d'entraînement (D), un ensemble à chenilles (25), comportant deux chenilles motorisées (37), destiné à transporter le câble du touret (22) à l'ensemble Venturi (1), tous lesdits éléments étant montés sur un chariot porteur (24), ledit appareil comprenant aussi un touret de reprise de câble (2), avec un système de chargement approprié monté sur un conteneur mobile (14),
**caractérisé en ce que** ledit appareil comprend en outre un dispositif (2) destiné à protéger contre le coincement mécanique longitudinal et à guider le câble dans le Venturi (1) ; des moyens (26, 27, 42, 43) servant à régler la position horizontale et des moyens (28, 29, 32) servant à régler la position verticale dudit ensemble Venturi (1) ; des moyens (34, 35, 36) servant à régler la position longitudinale dudit ensemble à chenilles (25) ; ainsi que des moyens (39, 40, 41) servant à régler la position appropriée des deux chenilles (37) de l'ensemble à chenilles (25), tous lesdits moyens de réglage ayant pour mission de faire avancer le câble axialement et de minimiser les contraintes asymétriques imposées au câble qui sont dues aux différentes composantes de traction exercées sur sa surface ; et **en ce que** ledit système de chargement du touret de reprise du câble sur le conteneur mobile (14) peut s'adapter aux différentes dimensions des tourets.

2. Appareil perfectionné selon la revendication 1, **caractérisé en ce que** ledit dispositif pour la protection mécanique du câble à l'intérieur du Venturi a une forme sensiblement cylindrique, avec une surface extérieure (4) lisse et à section décroissante dans le sens du mouvement du flux de fluide, et avec une section intérieure qui s'accroît légèrement vers le côté de sortie, et présente une embase de retenue (5) pouvant être emmanchée dans un orifice (A) du Venturi, pour l'entrée du câble.

3. Appareil perfectionné selon la revendication 2, **caractérisé en ce que** ledit dispositif pour la protection mécanique du câble à l'intérieur du Venturi (1) a une section intérieure qui croît légèrement en direction du côté de sortie.

4. Appareil perfectionné selon la revendication 2 ou 3, **caractérisé en ce que** l'étanchéité hydraulique entre ledit Venturi (1) et ledit dispositif pour la protection mécanique du câble à l'intérieur du Venturi est obtenue au moyen de deux joints reçus dans des logements appropriés (6) formés dans ladite embase (5) du dispositif.

5. Appareil perfectionné selon la revendication 2 ou 3, **caractérisé en ce que**, dans la deuxième moitié de sa longueur, c'est-à-dire dans la moitié qui, dans le mode de travail, est plus proche de l'orifice de sortie (D), ledit dispositif pour la protection mécanique du câble à l'intérieur du Venturi présente des fentes (7) prévues symétriquement sur la surface cylindrique, qui permettent le passage uniforme de l'écoulement dans le dispositif, sans créer de tourbillons dans l'écoulement.

6. Appareil perfectionné selon la revendication 2 ou 3, **caractérisé en ce que** ledit dispositif pour la protection mécanique du câble à l'intérieur du Venturi se termine avant l'orifice de sortie (D) du Venturi, avec un petit intervalle libre qui permet le passage du fluide restant mais sans laisser d'espace qui permettrait un éventuel pliage dangereux du câble.

7. Appareil perfectionné selon la revendication 2 ou 3, **caractérisé en ce que** l'embase de retenue (5) dudit dispositif pour la protection mécanique du câble à l'intérieur du Venturi comporte un logement (8) destiné à contenir un presse-étoupe, qui empêche l'écoulement à l'extérieur du Venturi par le côté de l'orifice d'entrée du câble (A).

8. Appareil perfectionné selon la revendication 2 ou 3, **caractérisé en ce que** ledit dispositif pour la protection mécanique du câble à l'intérieur du Venturi peut être divisé en deux parties, accouplées pendant le fonctionnement mais pouvant être séparées dans le cas où il est nécessaire de libérer le câble.

9. Appareil perfectionné selon la revendication 8, **caractérisé en ce que** ledit dispositif pour la protection mécanique du câble à l'intérieur du Venturi peut être assemblé au moyen de deux éléments mâles introduits dans les logements (10) et d'un écrou annulaire fileté jetable (11), fait d'une matière plastique à faible résistance mécanique, pour son ouverture.

10. Appareil perfectionné selon la revendication 1, **caractérisé en ce que** lesdits moyens (26, 27, 42, 43) servant à régler la position transversale horizontale dudit Venturi (1) présentent deux gorges transversales (26), formées dans la surface inférieure du Venturi (1), au moyen desquelles il prend appui avec possibilité de coulissement sur deux rails transversaux correspondants (42) prévus sur sa base d'appui (27).

11. Appareil perfectionné selon la revendication 10, **caractérisé en ce que** l'arrêt de la position transversale réglée du Venturi (1) par rapport au câble qui est obtenue en déplaçant le Venturi (1) au moyen de ses gorges (26) par rapport aux rails (42) de sa base d'appui (27) s'effectue au moyen de vis d'arrêt standards (43) qui agissent entre le Venturi (1) et sa base d'appui (27).

12. Appareil perfectionné selon la revendication 1, **caractérisé en ce que** lesdits moyens (28, 29, 32) servant à régler la position verticale dudit Venturi (1) comprennent ladite base d'appui (27) montée sur le chariot porteur (4) au moyen d'une vis sans fin (28), fixée en bas à la base d'appui (27), ladite vis s'accouplant avec une vis d'Archimède correspondante prévue dans le chariot porteur (24) et étant actionnée au moyen d'un volant (29).

13. Appareil perfectionné selon la revendication 12, **caractérisé en ce que** la position verticale dudit Venturi (1) est arrêtée au moyen d'un écrou de blocage (32) vissé sur ladite vis sans fin (28), contre ledit chariot porteur (24).

14. Appareil perfectionné selon la revendication 12 ou 13, **caractérisé en ce qu'**il comprend en outre des barres inférieures verticales (30), sous sa base d'appui (27), qui coulissent dans des logements (31) prévus dans le chariot porteur (24).

15. Appareil perfectionné selon la revendication 1, **caractérisé en ce que** lesdits moyens pour le réglage longitudinal de l'ensemble à chenilles (25) comprennent une vis sans fin (34), supportée par ledit ensemble à chenilles (1) et accouplée à une vis d'Archimède correspondante prévue dans ledit chariot (24), et qui peut être actionnée au moyen d'un volant (35).

16. Appareil perfectionné selon la revendication 15, **caractérisé en ce que** la position longitudinale réglée dudit ensemble à chenilles (1) est arrêtée par un écrou d'arrêt moleté (36) vissé sur ladite vis sans fin (34), contre ledit chariot porteur.

17. Appareil perfectionné selon l'une des revendications précédentes, **caractérisé en ce que** ledit ensemble Venturi (1) est relié audit ensemble à chenilles (25) au moyen d'un raccord de tube d'entrée du câble (33) ayant une forme tronconique, avec le sommet orienté vers les chenilles (37) de l'ensemble à chenilles (25).

18. Appareil perfectionné selon la revendication 1, **caractérisé en ce que** deux chenilles (37) de l'ensemble à chenilles (25) sont actionnées par un unique moteur au moyen d'une paire d'engrenages jumelés accouplée à l'arbre de sortie (38) dudit moteur.

19. Appareil perfectionné selon la revendication 1, **caractérisé en ce que** lesdits moyens (39, 40, 41) pour le réglage de la position appropriée des deux chenilles (37) de l'ensemble à chenilles (25) comprennent une vis d'Archimède (39), portée par le support de la chenille inférieure et en prise avec une vis d'Archimède reliée au support de la chenille supérieure, et actionnée par un volant (40).

20. Appareil perfectionné selon la revendication 19, **caractérisé en ce que** la position relative réglée entre les deux chenilles (37) de l'ensemble à chenilles (25) est arrêtée par un écrou de blocage moleté (1) vissé sur ladite vis sans fin (39), contre le châssis dudit ensemble à chenilles (25).

21. Appareil perfectionné selon la revendication 1, **caractérisé en ce qu'**il est muni d'un système de chargement comprenant deux cylindres (15, 16) appliqués avec pression sur les surfaces latérales du touret au niveau du trou central (17) pour charger le touret de reprise du câble sur le conteneur mobile, lesdits cylindres ayant un diamètre plus grand que le diamètre du trou central du touret (14) et une extrémité de forme tronconique (18, 19) pour centrer facilement le trou pendant le chargement et permettre le levage du touret et la rotation de ce dernier

22. Appareil perfectionné selon la revendication 21, **caractérisé en ce que** l'un (16) des deux cylindres est un piston hydraulique rétractable (20) commandé automatiquement, et l'autre (15) possède un prolongateur fixe (21), pour s'adapter à différents tourets de câble ayant des dimensions différentes.

23. Appareil perfectionné selon la revendication 21 ou 22, **caractérisé en ce que** l'entraînement en rotation du touret (22) pour enrouler et dérouler le câble est composé d'une tige (23), ladite tige s'accouplant à la joue du touret et l'entraînant pendant la rotation.
